# EUROPEAN PATENT APPLICATION

(11) **EP 1 513 351 A2**
(43) Date of publication of application: **09.03.2005**
(21) Application number: 04103691.4
(22) Date of filing: 30.07.2004
(51) Int. Cl.: H04N 9/87

(54) **A recording/playback apparatus**

(30) Priority: 02.09.2003 KR 2003061081
(71) Applicant: SAMSUNG ELECTRONICS CO., LTD., Suwon-City, Kyungki-do (KR)
(72) Inventor: Choi, Hye-jin, Gyeonggi-do (KR)
(74) Representative: Read, Matthew Charles

(57) **Abstract**

An image recording and reproducing system and method for displaying a state of a recording medium. The image recording and reproducing system capable of recording and reproducing an input image signal has a record medium (151,155) for storing an image data, a key-input unit (171) for inputting a display command to display a current state of the record medium (151,155), an on screen display (OSD) unit (165) for generating an OSD signal corresponding to a visual information showing the current state of the recording medium (151,155), a display unit for receiving the OSD signal, and displaying the OSD signal overlapping the displayed image, and a control unit (160), upon receiving the display command, for controlling to calculate the current state of the recording medium (151,155) to transmit to the OSD unit (165), and transmit the OSD signal to the display unit.

## Description

The present invention relates to a method of, and apparatus for, recording/playback of an image signal stored on a storage means.

An image recording and reproducing system records a transmitted signal containing an image, for example a broadcasting signal, and reproduces the recorded image. An example of an image recording and reproducing system is a video cassette recorder (VCR).

Recently, image recording and reproducing systems having a digital video discrewritable (DVD-RW) and a hard disc drive (HDD), have been introduced. The HDD and a DVD-RW have a larger storage capacity than a video tape, and thus store a large number of high definition images. In addition, since the HDD and the DVD store the images in a randomly accessible manner, searching the recorded images is quicker than when searching a video tape. Accordingly, the HDD and the DVD based systems are in increasing demand.

However, since the storage capacity is still limited even in the case of a high-capacity recording medium such as the HDD and the DVD, the storage capacity needs to be efficiently used. To accomplish this, a system capable of notifying a user of the current state of the recording medium is required. For example, informing the user of the amount of spare storage capacity remaining.

An object of the present invention is to solve at least the above problems and or disadvantages and to provide at least the advantages described below. Accordingly, an object of the present invention is to provide an image recording and reproducing system having a function of displaying the state of the recording medium.

The present invention relates a recording/playback apparatus comprising storage means having an image signal stored thereon.

A recording/playback apparatus according to the present invention is characterised by status determining means operable to generate a status signal indicative of the status of the storage means and means operable to generate a status image signal in dependence on the status signal and combine the status image signal and said image signal.

The present invention also relates to a method of recording/playback of an image signal stored on a storage means.

A method according to the present invention is characterised by generating a status signal indicative of the status of the storage means and generating a status image signal in dependence on the status signal, and combining the status image signal and said image signal.

This is advantageous because the user of the apparatus will be able to visualise the amount of space available on the apparatus to record images.

An embodiment of the present invention will now be described, by way of example only, and with reference to the accompanying drawings, in which:
Figure 1 is a diagram illustrating an image recording and reproducing system according to an embodiment of the present invention;
Figure 2 is a block diagram according to an embodiment of the image recording and reproducing system of Figure 1;
Figure 3 is a drawing illustrating the Hard Disc Drive (HDD) of Figure 2;
Figures 4A to 4C illustrate a screen in which a state of a recording medium is displayed; and
Figure 5 is a flowchart illustrating a method for displaying the state of the recording medium according to an embodiment of the present invention.

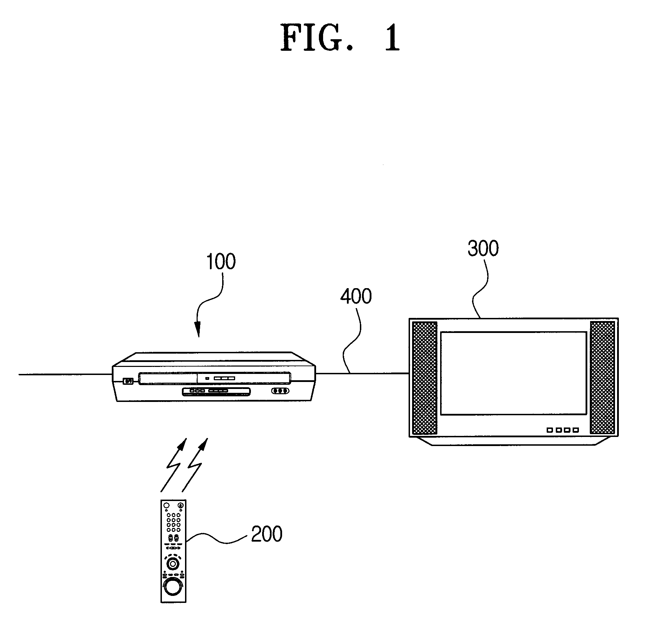

Referring to Figure 1, an image recording and reproducing system 100 is connected to a display apparatus such as a TV 300 through a transmission cable 400. The image recording and reproducing system 100 processes a signal received from an external control apparatus such as a remote controller 200, and transmits display information to the TV 300.

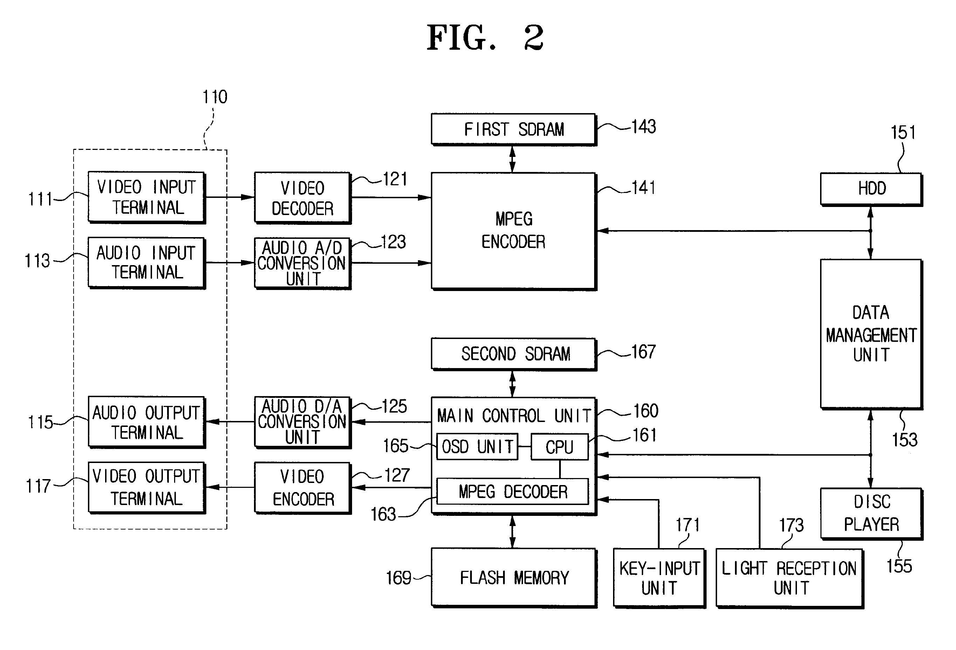

Referring to Figure 2, the image recording and reproducing system comprises an input and output terminal unit 110, a video decoder 121, an audio Analogue to Digital (A/D) converter 123, an audio Digital to Analogue (D/A) converter 125, a video encoder 127, a Moving Pictures Expert Group (MPEG) encoder 141, a hard disc driver (HDD) 151, a disc player 155, a main control unit 160, and a key-input unit 171.

The input and output terminal unit 110 receives a signal generated from a variety of image signal sources, and outputs the received signal as well as a signal from the HDD 151 and a disc player 155.

The input and output terminal unit 110 has a video input terminal 111, an audio input terminal 113, an audio output terminal 115, and a video output terminal 117.

The video decoder 121 converts an analogue video signal input through the video input terminal 111 to a digital video signal, and outputs the converted signal to the MPEG encoder 141. The audio A/D converter 123 converts an analogue audio signal received through the audio input terminal 113 to a digital audio signal, and passes the converted signal to the MPEG encoder 141.

The MPEG encoder 141 encodes the digital video signal and the digital audio signal using a predetermined compression format, respectively. The encoded signals are and stored on the HDD 151 in a specific file format. A first Synchronous Dynamic Random Access Memory (SDRAM) 143 is a buffer for temporarily recording data encoded in the MPEG encoder 141.

A data management unit 153 manages the reproduction and recording of a file recorded on the HDD 151 and the disc player 155. Specifically, the data management unit 153 manages storage of a file from the disc player 155 to the HDD 151 or from the HDD 151 to the disc player 155. The data management unit 153 also manages the storage of a file encoded in the MPEG encoder 141 to the HDD 151, under the control of the main control unit 160.

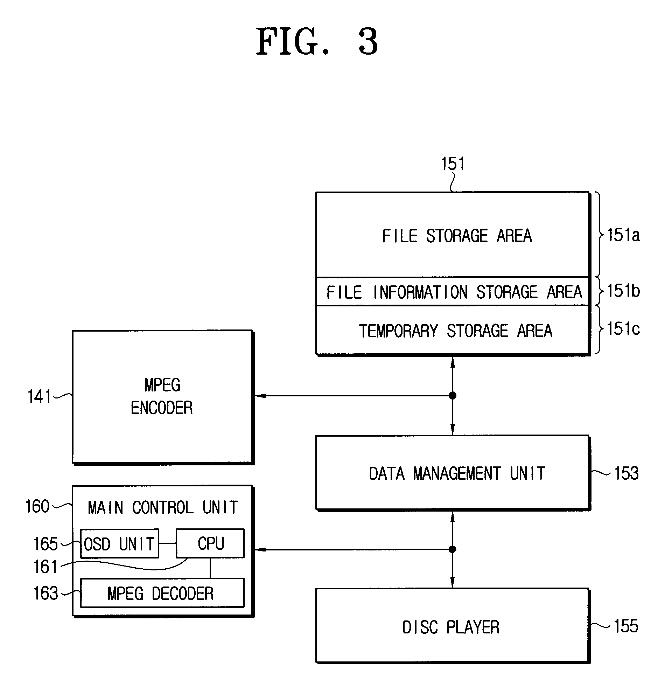

As shown in Figure 3, the HDD 151 is divided into three storage areas 151a, 151b, and 151c. In temporary storage area 151c, an image data output from the MPEG encoder 141 is stored temporarily. In other words, the temporary storage area 151c is provided in order that a part of the HDD 151 is used as a buffer. In one embodiment of the present invention, instead of using part of the HDD 151 as the buffer, a separate buffer can be provided.

The capacity of the temporary storage area 151c can be varied by the user. If available space within the temporary storage area 151c is exhausted due to large amounts of image data, previously-input data is removed in the order in which the image data was input so that new image data can be stored.

In a file-storage area 151a, image data required by the user is stored in a file format. In other words, when the user wishes for the images that are being watched to be stored, the data management unit 153 stores the image data which was located in the temporary storage area 151c in the file storage area 151c. However, when the file storage area 151a has no available space (i.e. the file storage area 151a is full), no more image data is stored. The temporary storage area 151c removes the previously-stored image data to enable the new data to be received.

A file information storage area 151b records information about the file stored in the file storage area 151a such as a title of the file, file size, storage date, and image quality.

Although the HDD 151 is described in an embodiment of the present invention as a recording medium for storing an image data output from the MPEG encoder 141, it is only by way of an example. Therefore, the recording medium is not limited to the HDD 151. Any recording media such as a semiconductor memory, an optical recording medium, and a magnetic recording medium, can be substituted for the HDD 151.

The main control unit 160 is formed as a single Integrated Circuit (IC), in which a central processing unit (CPU) 161, an MPEG decoder 163 for decoding a file compressed by MPEG, and an on-screen display (OSD) unit 165 for generating data corresponding to a menu screen and displayed letters, are combined. The MPEG decoder 163 and the OSD unit 165 may be separately located in different chips, and connected to the main control unit 160. In a flash memory 169, different programs are stored to control the functions of the main control unit 160.

The MPEG decoder 163 decodes the data compressed in MPEG and which has been stored in the HDD 151 and the disc player 155. The MPEG decoder 163 restores the digital video signal and the digital audio signal, and outputs the signals.

The video encoder 127 encodes the digital video signal input from the MPEG decoder 163 into the analogue video signal. The analogue video signal is output to the video output terminal 117. The audio D/A converter 125 converts the digital audio signal provided by the MPEG decoder 163 into the analogue audio signal. The analogue video signal is output to the audio output terminal 115.

The analogue signals are transmitted to the display apparatus such as a TV or a monitor for displaying. The analogue audio signal may also be transmitted to a speaker, for example, to be reproduced.

The key-input unit 171 is located on the front of the image recording and reproducing system 100, and passes an input from the user to the main control unit 160. A light reception unit 173 receives an operation signal from the user transmitted by the remote controller 200, and outputs the signal to the main control unit 160.

The image recording and reproducing system operates in a time-shift mode, a record mode, or a reproduce mode, in accordance with the user's selection. The user can set a mode using the key-input unit 171 or the remote controller 200. Hereinafter, the operation of the above three modes in the image recording and reproducing system will be described.

First, the time-shift mode enables the user to watch an image directly, by displaying the image signal. The image will be watched on the TV 300. The image may be derived from a broadcast input image signal. Alternatively, the image may be derived from the image signal output from a separate external device connected to the input terminals 111, 113 of the image recording and reproducing system 100.

When the video and audio signal input through the video and audio input terminals 111, 113 is an analogue signal, the signal is converted to a digital signal. This conversion takes place at the video decoder 121 and the audio A/D converter 123. The digital signals are then converted to MPEG format using the MPEG encoder 141. The MPEG format compresses the digital signal into compressed image data.

The compressed image data is stored in the temporary storage area 151c of the HDD 151. The data management unit 153 reads the compressed image data from the temporary storage area 151c, and transmits it to the MPEG decoder 163. The compressed image data is uncompressed and reconverted using the MPEG decoder 163. This digital signal is then converted to the analogue signal at the video encoder 127 and the audio D/A converter 125. The converted analogue signal is transmitted to the TV 300 through the audio and video output terminals 115, 117, and displayed for the user.

While watching the broadcast through the image recording and reproducing system 100, the user can perform many functions with the displayed image. For example, the user can pause (P), rewind (REW), and fast forward (FF) the displayed images. This is possible because the broadcasting signal input to the image recording and reproducing system 100 is stored in the temporary storage area 151c of the HDD 151 over a predetermined period of time. In other words, the user is able to rewind or fast forward the broadcast contents stored within the temporary storage area 151c. Therefore, even while watching the TV broadcast, the user can use the functions of fast searching or pausing, which were available only previously with the video tape or the DVD. This performs a "time-shifting" function.

Secondly, the record mode displays the broadcast image signal on the TV 300 whilst simultaneously storing the image signal to the HDD 151. The record mode is initiated by the user pressing a record (REC) button of the key-input unit 171 or the remote controller 200. When the record mode begins, the CPU 161 controls the data management unit 153 so that the currently displayed image is stored in the HDD 151. The data management unit 153 reads from the temporary storage area 151c image data which refers to a frame of the currently displayed image, and image data received after, and stores the data in the file storage area 151a. The above process is continued until the user stops the recording. The file information storage area 151b separately stores information such as the title, size, storage date, and the image quality of the image file.

When a predetermined portion of the whole storage capacity of the HDD 151 is filled, the CPU 161 informs the user of the fact by outputting a warning message. A predetermined portion may be 90% of the storage capacity. The warning may be a displayed message on the screen of the TV 300 or may be an audible alarm sounded through a speaker of the TV 300.

In addition, the image recording and reproducing system 100 is capable of displaying one broadcasting signal and storing another broadcast signal in the HDD 151 at the same time. In this case, the input broadcast signal to be displayed is stored in the temporary storage area 151c, then output to the MPEG decoder 163 via the data management unit 153, and finally displayed on the TV 300. At the same time, the broadcast signal to be recorded is converted into an MPEG signal and as such is compressed using the MPEG encoder 141. The MPEG signal is then stored in the file storage area 151a.

Thirdly, the reproduce mode displays the image data which is recorded on the HDD 151 or the disc player 155 on the TV 300. This enables the user to watch the image. In the reproduce mode, the CPU 161 controls the data management unit 153 so that the image data recorded in the HDD 151 or the disc player 155 is output to the MPEG decoder 163. The audio and video signals that are decoded at the MPEG decoder 163 are converted to analogue signals respectively at the audio D/A converter 125 and the video encoder 127. Then, the converted audio and video signals are passed through the audio and video output terminals 115, and 117, and transmitted to the TV 300.

The user can request information on the current operation mode of the image recording and reproducing system 100 and the currently displayed image, while watching the displayed image. To do this, the user presses a display button (not shown) provided on the key-input unit 171 or the remote controller 200, and the image recording and reproducing system 100 displays the current operation mode and the image information on the TV 300 in a form of the on-screen display (OSD).

If the user inputs the display command through the key-input unit 171 or the remote controller 200, the command is transmitted to the CPU 161. If the remote controller 200 is used, the command is received by the light reception unit 173, and is passed to the CPU 161.

When the CPU 161 receives the display command, it determines the current mode of the image recording and reproducing system. This is because the information which will be provided to the user varies according to the current mode of the image recording and reproducing system 100. For example, when the image recording and reproducing system 100 is in the reproduce mode so that signals recorded on the HDD 151 are displayed, the temporary storage area 151c of the HDD 151 is not in use. Therefore, information relating to the temporary storage area 151c is redundant. If the redundant information is displayed, the image currently being displayed may be obstructed. This may be unwanted by the user.

The CPU 161 reads useful information in each operation mode from the HDD 151 through the data management unit 153. The read information includes the amount of image data currently stored in the HDD 151 as well as remaining capacity of the HDD 151. In addition, data information such as the title, size, the storage date, and the image quality of the currently displayed file is also read from the data stored in the file information storage area 151b.

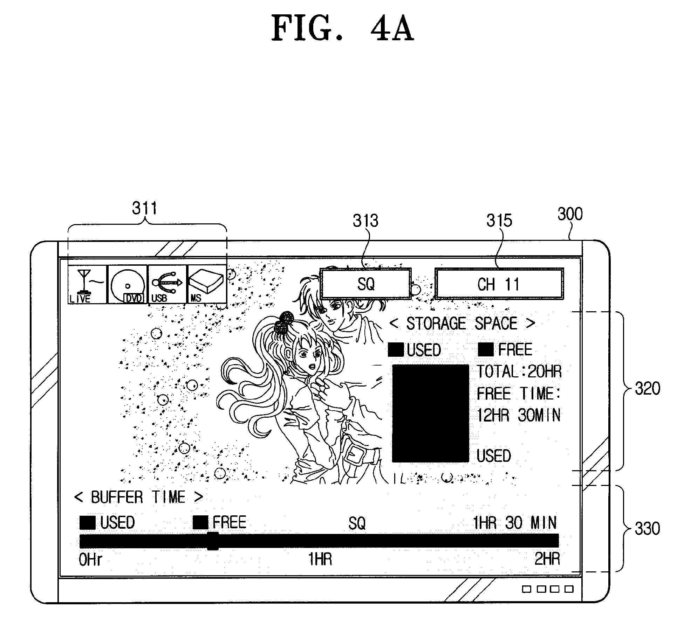

Hereinafter, displayed information and the displaying method of the above-described three operation modes will be described with reference to Figures 4A to 4C.

Referring to Figure 4A, connected device information 311, image quality information 313, and channel information 315 are displayed on an upper part of the screen. The current HDD state 320 is on the right hand side towards the middle of the screen, and a current state of the temporary storage area 151c provided as a buffer (hereinafter, referred to as 'buffer state 330') is on a lower part of the screen.

The connected device information 311 shows devices currently built inside the image recording and reproducing system 100 or connected thereto using the input terminals 111, and 113. The user is able to select one of the devices by referring to the displayed information 311, and the image signal input from the selected device is displayed. As shown in Figure 4A, the devices built-in or connected to the image recording and reproducing system 100 may include a broadcasting receiver, a DVD player, a universal serial bus (USB), and a memory stick (MS).

The image quality information 313 displays a corresponding grade such as Super High Quality (SHQ), High Quality (HQ), and Standard Quality (SQ) as an image quality grade of the currently displayed image. In Figure 4A, the 'SQ' is displayed by way of example.

The channel information 315 displays a broadcast channel selected by the user when the currently input image signal is a broadcast signal. In Figure 4A, 'CH11' is displayed as an example of the broadcasting channel information of the currently displayed image.

The current HDD state 320 displays an amount of the file storage area 151a of the HDD 151 that is used. More particularly, the amount of data currently stored in the HDD 151 and the remaining capacity of the HDD 151 are displayed in different colours respectively. As shown in Figure 4A, to provide the user with a visual effect, the HDD 151 may be represented as a cylindrical column so that the amount of stored image data and the remaining capacity are displayed in the column with different colours. However, this is an example. Therefore, the current HDD state 320 can be indicated using other adequate methods such as a straight gauge bar or a circle.

The current HDD state 320 also shows an entire capacity of the file storage area 151a, and the remaining capacity using a predetermined measure. For example, a measure in 'byte' units can be employed. This is a unit for data capacity. However, with the 'byte' unit, it is not easy for users to note clearly how much more image data can be stored. Moreover, for example, two video images of the same length may have different sizes due to a different level of the image quality. More specifically, as image definition of the video increases, the data size becomes larger. Due to this fact, the user cannot easily predict how much image data can be stored in the remaining storage space. Therefore, in an embodiment of the present invention, in displaying the entire capacity of the file storage area 151a and the remaining storage space, a time unit is used. The amount of time remaining is based on the image quality of the currently displayed image as a standard. The maximum time of a video image for the file storage area 151a is displayed as the whole capacity, and a length of time of a video image which can be stored in the remaining space is displayed as a remaining capacity. In Figure 4A, with a message 'SQ' showing the image quality of the currently displayed image, a message 'Total: 20Hr' is displayed representing that image data of maximum 20 hours can be stored in the file storage area 151a, and another message 'Free Time: 12Hr 30Min' is displayed representing the image data of 12 hours and 30 minutes length of the 'SQ' level definition can be stored.

The buffer state 330 may show the whole capacity of the temporary storage area 151c, and the free capacity using a predetermined measure. The measure in 'byte' units can be employed for the buffer state 330. A time unit is also usable and more preferable for the same reason mentioned above. In Figure 4A, with the 'SQ' level of the image quality of the currently displayed image, a message '2Hr' is displayed representing that a video image of a maximum 2 hours can be stored in the temporary storage area 151c. A further message '1Hr 30Min' is also displayed representing that the remaining, free, capacity of the temporary storage area 151c is 1 hour and 30 minutes. Also, a gauge bar is used to represent the temporary storage area 151c. Along the gauge bar, a position indication block is provided that indicates the position of the currently displayed frame in the temporary storage area 151c. Figure 4A shows a broadcast signal being input in a real time basis. If the user pauses the video, the position indication block will stop. However, as the video image is still being input and so being stored, the gauge bar gradually moves rightward. If the user begins to rewind the video image, the position indication block moves leftward, and the previously displayed video image is displayed in reverse. In case of fast forwarding, the video image is displayed more quickly than real-time.

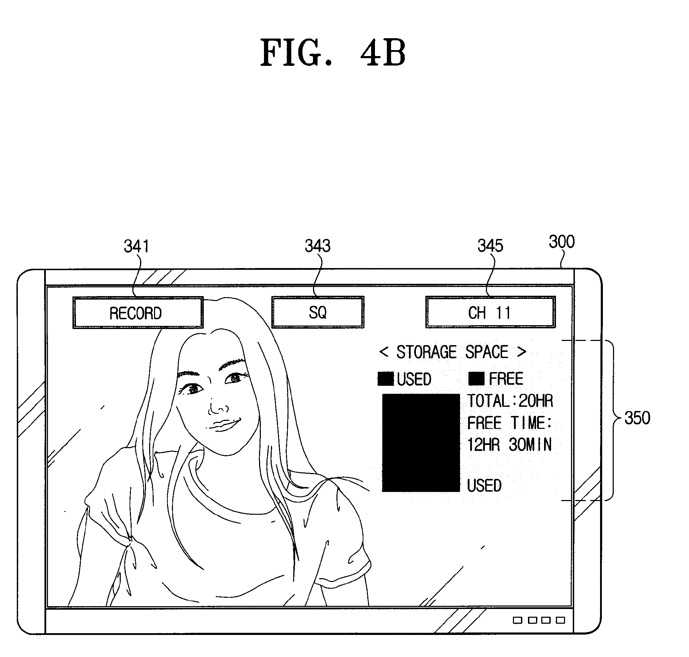

Referring to Figure 4B, on the upper part of the screen, a current mode 341, image quality information 343, and channel information 345 are displayed. On the right in the middle of the screen, the current HDD status 350 is displayed.

In the current mode 341, a message 'RECORD' is displayed to indicate the current operation mode. The image quality information 343 displays the image quality level of the currently displayed image. This may be SHQ, HQ, and SQ depending on the definition. The higher the image quality, the better the definition of the video image. However, as the high definition video image of a particular length requires more storage space, the user may compare and consider the conditions to determine the most suitable image quality level to select for storing the image.

The channel information 345 and the current HDD state 350 will not be described as they are the same as in the time-shift mode. However, the current HDD state 350 is displayed in real time as the image data is continuously stored in the file storage area 151 a in the record mode.

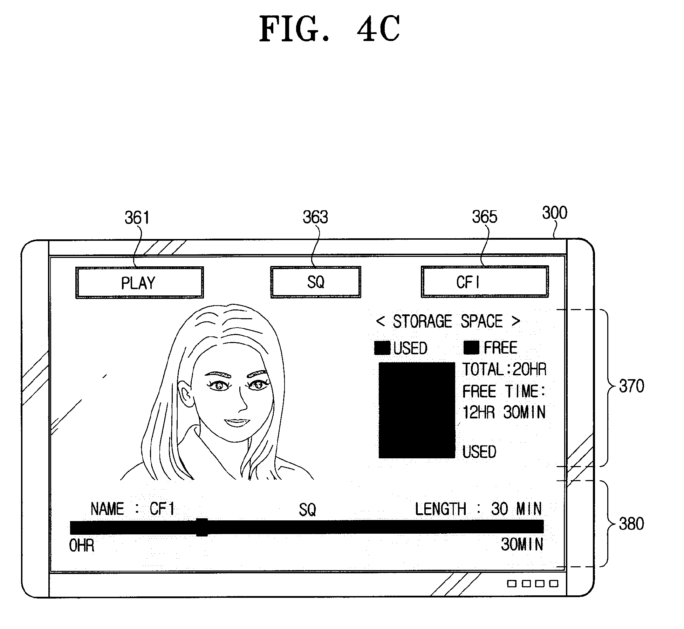

Figure 4C is a result of performing the user's display command in the reproduce mode. Referring to Figure 4C, the current mode 361, image quality 363, and file title 365 are displayed on an upper part of the screen. On the right in the middle of the screen, the current HDD state 370 is displayed, and on a lower part, file information 380 of the currently displayed image is provided.

The current mode 361 displays a message 'PLAY' indicating the current operation mode, and the image quality information 363 shows the image quality level of the currently reproduced image.

The file title 365 is the title of the reproduced file. This is input by the user during recording. In Figure 4C, 'CF1' is displayed as the title of the reproduced file. The current HDD state 370 operates in the same manner as in the time-shift mode, and accordingly it will not be described. The current HDD state 370 shows a current state of the file storage area 151a of the HDD 151, including the size of the video images stored in the HDD 151 at the moment. The current HDD state 370 also displays the remaining, spare, capacity of the HDD 151 for storage of video image data. The stored and free capacities are displayed in different colours. The current HDD state 370 may be displayed as a cylinder, a gauge bar, or a circle. In addition, to indicate the whole capacity of the file storage area 151a and the remaining, spare, storage space, the time unit is also employed instead of the 'byte' unit.

The file information 380 displays information about the reproduced video image file, such as the file title, the image quality, and a whole length of the file. In addition, the file information displays the whole length as a bar, having a reproduction position indication block moving thereon to show the position of the currently reproduced frame in the whole video image file. Accordingly, the user knows how much of the file has been displayed and how much remains. Additionally, when the user fast forwards or rewinds, the reproduction position indication block accordingly moves. The 'byte' unit may be used to indicate the whole length of the video image file in the file information 380.

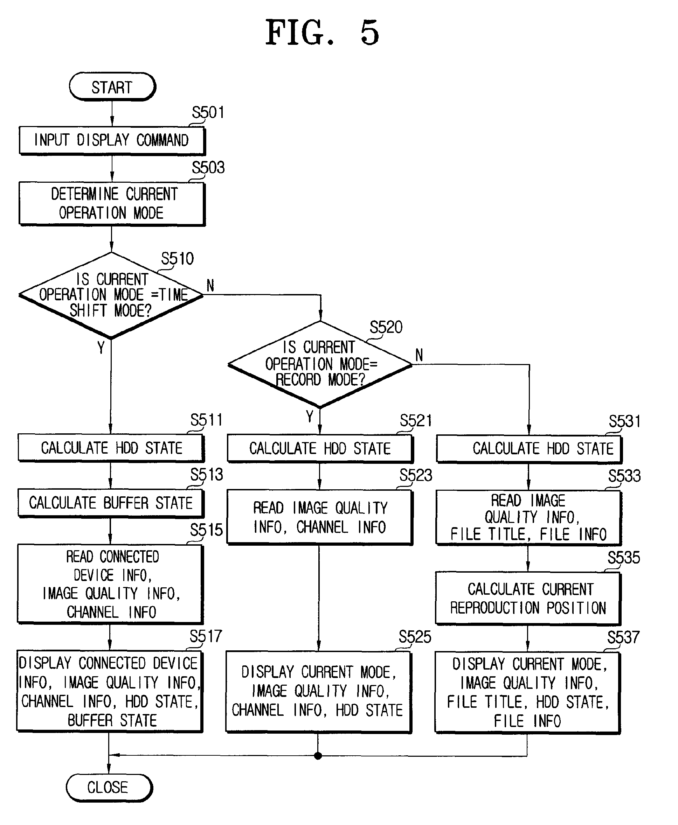

Referring to Figure 5, if the user wants information relating to the current operation mode of the image recording and reproducing system, and the currently displayed image, the user has to input the display command using the display button (not shown) of the key-input unit 171 or the remote controller 200. This starts the display operation (S501).

The display command input by the user is passed to the CPU 161. The CPU 161 determines the current operation mode of the image recording and reproducing system (S503) because the information to be provided to the user differs according to the operation mode as described above.

If the current operation mode is determined as the time-shift mode (S510), the CPU 161 calculates the current status of the HDD. More particularly, the CPU 161 calculates the size of the video image data which is currently stored in the file storage area 151a, as well as remaining capacity for the storage of video image data (S511).

The CPU 161 also calculates the buffer status, and more particularly, the whole capacity of the temporary storage area 151c, the size of the currently stored video image data, and the remaining storage capacity (S513).

In addition, the CPU 161 determines the connected device information, image quality information, and channel information (S515).

The CPU 161 transmits to the OSD unit 165 the information calculated or determined through the processes from S511 to S515. The OSD unit 165 generates signals corresponding to letters, numbers and shapes which represent the transmitted information. The signals generated by the OSD unit 165 are transmitted to the TV 300 via the video encoder 127 and video output terminal 117, and displayed (S517). The displayed information includes connected device information, video image quality information, channel information, the current HDD status, and the buffer status.

If the current operation mode is determined to be the record mode (S520), the CPU 161 calculates the current HDD status (S521), and determines the image quality information, and the channel information (S523). The information calculated or determined through the processes from S521 to S523 are transmitted to the TV 300, and displayed (S525). These operations are the same as described in the time-shift mode, and therefore, will be omitted for conciseness. The displayed information includes the current mode, video image quality information, channel information, and current HDD status.

If the current operation mode is determined to be the reproduction mode (S520), the CPU 161 calculates the current HDD status (S531), and determines the video image quality information, the video image file title, and video image file information (S533). The CPU 161 calculates the position of the currently reproduced frame in the whole video image file (S355). The information calculated or read through the processes from S531 to S535 are transmitted to the TV 300, and displayed (S537). The above operations are the same as described in the time-shift mode, and therefore, will be omitted for conciseness. The displayed information includes the current mode, video image quality information, video image file title, current HDD status, and the video image file information. The video image file information includes the video image file title, file size, storage data and the video image quality.

As described above, in embodiments of the present invention, the user can visually notice the current state of the record medium. Therefore, the storage space of the record medium can be more effectively allocated.

## Claims

1. A recording/playback apparatus comprising storage means (151) having an image signal stored thereon, **characterised by:**
status determining means (160) operable to generate a status signal indicative of the status of the storage means (151); and
means (127) operable to generate a status image signal in dependence on the status signal and combine the status image signal and said image signal.

2. An apparatus according to claim 1, wherein the status determining means (160) is arranged to generate said status signal, which is indicative of the amount of storage space available for the recording of new images in the storage means (151), in accordance with a property of the image being currently stored.

3. An apparatus according to either one of claims 1 or 2, comprising mode selection means (161) operable to switch the apparatus (100) between first and second modes, whereby the status determining means (160) generates the status signal in accordance therewith.

4. A method of recording/playback of an image signal stored on a storage means (151), **characterised by:**
generating a status signal indicative of the status of the storage means (151); and
generating a status image signal in dependence on the status signal, and combining the status image signal and said image signal.

5. A method according to claim 4, comprising, generating said status signal, which is indicative of the amount of storage space available for the recording of new images in the storage means (151), in accordance with a property of the image being currently stored.

6. A method according to either one of claims 4 or 5, comprising switching between first and second modes and generating the status signal in accordance therewith.

7. An image recording and reproducing system for recording and reproducing an input image signal, comprising:
a recording medium for storing an image data;
a key-input unit for inputting a display command for displaying a current state of the recording medium;
an on screen display (OSD) unit for generating an OSD signal corresponding to a visual information showing the current state of the recording medium;
a display unit for receiving the OSD signal, and displaying the OSD signal overlapping the displayed image; and
a control unit, for controlling to calculate the current state of the record medium to transmit to the OSD unit, and transmit the OSD signal to the display unit upon receiving the display command.

8. The image recording and reproducing system of claim 7, wherein the current state of the recording medium comprises at least one of a used capacity, indicating a size of the image data which is stored on the recording medium, and a remaining capacity indicating a size of the image data which can be stored on the rest of the recording medium.

9. The image recording and reproducing system of claim 8, wherein
the used capacity is information regarding one of a byte number and reproduction time of the image data stored on the recording medium, and
the remaining capacity is information regarding one of a byte number and reproduction time of the image data which can be stored on the rest of the recording medium.

10. The image recording and reproducing system of claim 8, wherein the visual information further comprises information in which the recording medium is represented by a predetermined shape, and the used capacity and the remaining capacity are displayed in the predetermined shape respectively in different colors.

11. The image recording and reproducing system of claim 10, wherein the predetermined shape is one of a cylindrical column, a straight bar and a circle.

12. The image recording and reproducing system of claim 7, wherein the recording medium is one of a hard disc drive, a semiconductor memory, an optical recording medium, and a magnetic recording medium.

13. The image recording and reproducing system of claim 7, further comprising:
an input signal processing unit for converting an input image signal to a digital signal, compressing the signal and storing generated image data on the record medium; and
an output signal processing unit for extending the image data withdrawn from the record medium, converting the data to an analog signal, and transmitting the signal to the display unit.

14. The image recording and reproducing system of claim 13, wherein
the key-input unit further comprises a mode selection key for selecting one of a time-shift mode which displays the input image signal, a record mode which stores the image signal in the recording medium, and a reproduction mode which reproduces the stored image signal, and
the control unit controls the input signal processing unit and the output signal processing unit to operate corresponding to a selected mode among the time-shift mode, the record mode and the reproduction mode.

15. The image recording and reproducing system of claim 14, wherein, upon receiving the display command during the time-shift mode, the control unit transmits additional information to the OSD unit, including the kinds of devices connected to provide the image signal to the input signal processing unit, an image quality of the image signal, a selected channel, and a current state of a buffer which temporarily stores the image data generated in the input signal processing unit.

16. The image recording and reproducing system of claim 14, wherein, upon receiving the display command during the record mode, the control unit transmits additional information to the OSD unit, including the information on the record mode which is currently performed, the image quality of the image signal, and the selected channel.

17. The image recording and reproducing system of claim 14, upon receiving the display command during the reproduction mode, the control unit transmits additional information to the OSD unit, including the information on the reproduction mode which is currently performed, the image quality of the reproduced image signal, the image signal title, the image signal size, and a time position of the currently reproduced frame.

18. A displaying method of an image recording and reproducing system for storing an input image data on a recording medium, and reproducing the stored image data, the displaying method comprising the steps of:
inputting a display command to display a current state of the recording medium;
calculating the current state of the record medium upon the input of the display command,;
generating an on screen display (OSD) signal corresponding to a visual information showing the calculated current state of the recording medium; and
receiving the OSD signal and displaying it overlapping the displayed image.

19. The displaying method of the image recording and reproducing system of claim 18, wherein the current state of the recording medium includes at least one of a used capacity indicating a size of the image data which is stored on the recording medium, and a remaining capacity indicating a size of the image data which can be additionally stored on the recording medium.

20. The displaying method of the image recording and reproducing system of claim 19, wherein
the used capacity is information regarding one of a byte number and its reproduction time of the image data stored on the recording medium, and
the remaining capacity is information regarding one of a byte number and its reproduction time of the image data which can be stored on the rest of the recording medium.

21. The displaying method of the image recording and reproducing system of claim 19, wherein the visual information further comprises information in which the recording medium is represented by a predetermined shape, and the used capacity and the remaining capacity are displayed in the predetermined shape respectively in different colors.

22. The displaying method of the image recording and reproducing system of claim 21, wherein the predetermined shape is one of a cylindrical column, a straight bar and a circle.

23. The displaying method of the image recording and reproducing system of claim 18, wherein the inputting step further comprises a step of selecting one of a time-shift mode which displays the input image signal, a record mode which stores the image signal in the record medium, and a reproduction mode which reproduces the stored image signal.

24. The displaying method of the image recording and reproducing system of claim 23, wherein, upon selection of the time-shift mode in the inputting step, the generating step further generates the OSD signal corresponding to the visual information on types of devices connected to provide the image signal to the input signal processing unit, an image quality of the image data, a selected channel, and a current state of a buffer which temporarily stores the image data generated in the input signal processing unit.

25. The displaying method of the image recording and reproducing system of claim 23, wherein, upon selection of the record mode in the inputting step, the generating step further generates the OSD signal corresponding to the visual information on the record mode which is currently performed, the image quality of the image data, and the selected channel.

26. The displaying method of the image recording and reproducing system of claim 23, wherein, upon selection of the reproduction mode in the inputting step, the generating step further generates the OSD signal corresponding to the visual information on the reproduction mode which is currently performed, the image quality of the reproduced image data, the image data title, the image data size, and a time position of the currently reproduced frame.
